# EUROPEAN PATENT APPLICATION

(11) **EP 0 614 799 A1**
(43) Date of publication of application: **14.09.1994**
(21) Application number: 93650009.9
(22) Date of filing: 09.03.1993
(51) Int. Cl.: B62L 1/00, B62L 1/10

(54) **Bicycle brake shoe assembly**

(71) Applicant: Hsueh, Chin-Yung, Tien Wei Hsiang, Changhua (TW)
(72) Inventor: Hsueh, Chin-Yung, Tien Wei Hsiang, Changhua (TW)
(74) Representative: Coyle, Philip Aidan

(57) **Abstract**

The invention provides a brake shoe (1) for a bicycle wherein the thickness of the brake shoe (1) is greater at the rear end (112) than at the front end (111) to provide a gradually sloping brake surface (11). The sloping brake surface (11) is provided with a plurality of grooves (12, 13), the grooves extending substantially obliquely across the brake surface (11).

## Description

### Field of the Invention

The present invention relates to bicycle brake shoe assemblies, and relates more particularly to the brake shoe for a bicycle brake shoe assembly.

### Description of Prior Art

An ordinary brake caliper assembly generally has two brake shoe assemblies respectively fastened to an outer brake arm and an inner brake arm. Each brake shoe assembly is generally comprised of a brake shoe fastened to a brake shoe holder. In use, the brake shoe of each brake shoe assembly is moved to press upon the rim of a bicycle wheel to stop its movement. The brake shoe commonly has a flat brake surface which abuts a bicycle wheel rim during braking. When pressed on the rim of a bicycle wheel to stop its movement, an inertia effect occurs in causing the bicycle rider to bend forwards and the tyre to heavily rub against the ground, and therefore the bicycle rider may fall from the bicycle and the tyre may wear away easily.

### SUMMARY OF THE INVENTION

The present invention has been accomplished under the aforesaid circumstances. It is therefore an object of the present invention to provide a bicycle brake shoe assembly which reduces or eliminates the occurrence of an inertia effect during braking of a bicycle. It is another object of the present invention to provide a bicycle brake shoe assembly which automatically guides water away from the brake shoe to ensure enhanced brake efficiency. It is still another object of the present invention to provide a bicycle brake shoe assembly which is durable in use.

According to the present invention there is provided a brake shoe for a bicycle as claimed in claim 1.

The advantage of the invention is that the movement of a bicycle wheel is stopped gradually thus substantially reducing the occurrence of an inertia effect.

Preferably, the sloping brake surface is provided with at least one groove for guiding water away from the brake surface.

The advantage of this feature is that it enhances braking efficiency and ensures a positive braking effect is maintained.

Preferably, there is provided a plurality of grooves in the sloping brake surface the grooves extending substantially obliquely across the sloping brake surface. This arrangement of oblique grooves has been found to significantly enhance the removal of water from the brake surface.

### BRIEF DESCRIPTION OF THE DRAWINGS

The foregoing and other objects, features and advantages of the present invention will be best understood from the following description, the appended claims and the accompanying drawings in which:
Fig. 1 illustrates the positioning of brake caliper assemblies on a bicycle according to the present invention;
Fig. 2 is an elevational view of a bicycle brake shoe assembly according to the present invention; and
Fig. 3 illustrates two bicycle brake shoes of the present invention pulled to stop the movement of a bicycle wheel.

### DETAILED DESCRIPTION OF THE PREFERRED EMBODIMENT

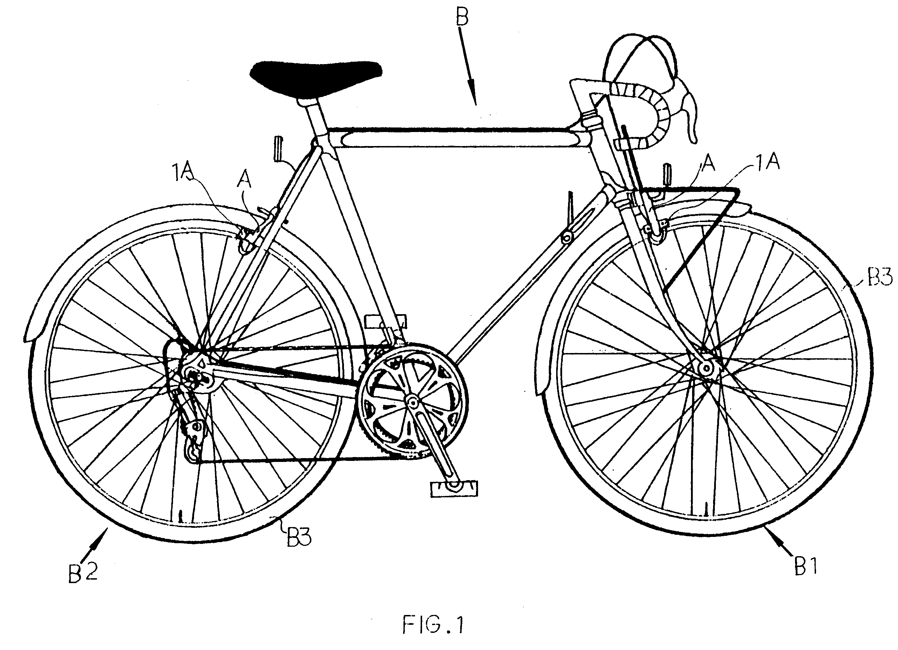

Referring to Fig. 1, a bicycle B has a brake means in the form of two brake caliper assemblies A which are respectively mounted on the frame of a bicycle B over the front wheel B1 and the rear wheel B2. Each brake caliper assembly A has two brake shoe assemblies 1A pulled by a brake cable to rub against the rim of the wheel B1 or B2 in stopping the bicycle B.

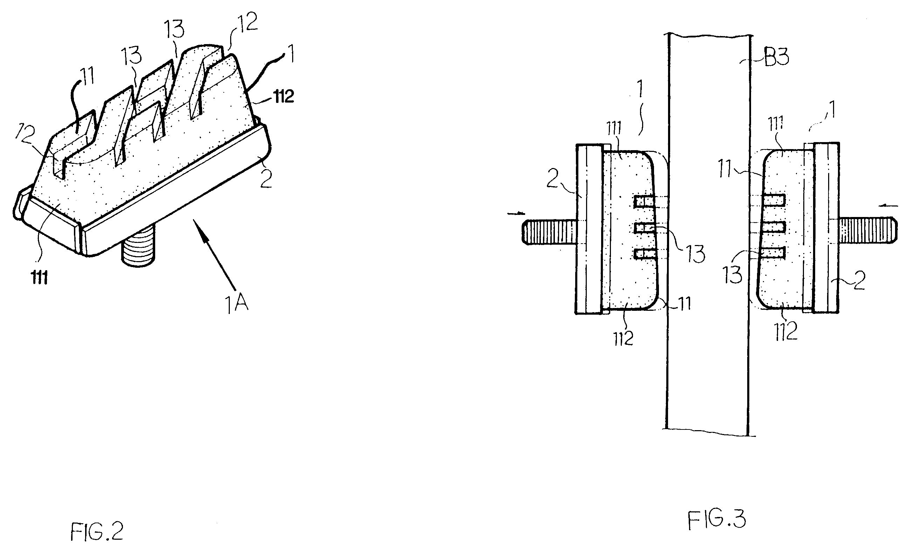

Referring to Fig. 2, the brake shoe assembly 1A comprises a brake shoe 1 fastened to a brake shoe holder 2. The brake shoe 1 has a brake surface 11 and has a thinner front end 111 and a thicker rear end 112, and therefore the brake surface 11 of the brake shoe 1 is gradually sloping towards the rear end. The brake surface 11 is the surface which engages the rim of bicycle wheel B1 or B2. A plurality of narrow, oblique water grooves 12,13 are made on the sloping brake surface 11 of the brake shoe 1. The grooves 12, 13 extend into the brake shoe 1, substantially at right angles relative to a surface (not shown) of the brake shoe opposite to that of the brake surface 11.

Referring to Fig. 3, during each brake operation, the thicker rear end 112 is pulled to rub against the rim of the wheel first (see the real line) in reducing the revolving speed of the tyre B3, and immediately thereafter the thinner front end 111 is forced to press upon the rim of the wheel (see the dotted line) in stopping the movement. Because the revolving speed of the wheel is gradually reduced by the thicker rear end 112 of the brake shoe 11 and then stopped as the whole brake surface 11 including the thinner front end 111 thereof engages the rim of the wheel, the inertia effect caused by a sudden brake is substantially eliminated. Because inertia effect is substantially eliminated, the tyre B3 will bear less friction resistance from the ground. Furthermore, if the rim of the bicycle wheel is wet with water, the water grooves 12,13 will guide the water away from the brake surface 11, and therefore a positive brake effect is constantly maintained.

It will also be noted from Fig. 3 that the grooves 12,13 are cut into the brake surface 11 substantially at right angles to a notional vertical plane containing the tyre B3. It will also be noted that the terms 'front end' and 'rear end' of the brake shoe will be understood in terms of the front and rear ends of the bicycle B.

## Claims

1. A brake shoe for a bicycle characterised in that the thickness of the brake shoe is greater at the rear end than at the front end to provide a gradually sloping brake surface.

2. A brake shoe as claimed in claim 1, wherein the sloping brake surface is provided with at least one groove for guiding water away from the brake surface.

3. A brake shoe as claimed in claim 2, wherein there is provided a plurality of grooves in the sloping brake surface, said grooves extending substantially obliquely across the sloping brake surface.

4. A brake shoe as claimed in claim 2 or 3, wherein the groove(s) extend into the brake shoe, substantially at right angles relative to a surface of the brake shoe opposite to that of the brake surface.

5. A bicycle brake shoe assembly comprising a brake shoe as claimed in any preceding claim secured in a brake shoe holder.

6. A bicycle brake shoe assembly comprising a brake caliper assembly having two brake shoe assemblies secured to the arms of the brake caliper and wherein each brake shoe assembly comprises a brake shoe as claimed in any one of claims 1 to 4.

7. A bicycle having a brake means, wherein the brake means comprises a brake shoe as claimed in any one of claims 1 to 4.
